# EUROPEAN PATENT APPLICATION

(11) **EP 3 889 841 A1**
(43) Date of publication of application: **06.10.2021**
(21) Application number: 20193247.2
(22) Date of filing: 28.08.2020
(51) Int. Cl.: G06N 3/04, G06N 3/08, G06F 16/35

(54) **METHOD AND APPARATUS FOR TRAINING A CLASSIFICATION NEURAL NETWORK, TEXT CLASSIFICATION METHOD AND APPARATUSES, AND DEVICE**

(30) Priority: 31.03.2020 CN 202010244144
(71) Applicant: Beijing Xiaomi Pinecone Electronics Co., Ltd., Beijing 100085 (CN)
(72) Inventor: XU, Zeyu, Beijing, 100085 (CN); MENG, Erli, Beijing, 100085 (CN); SUN, Lei, Beijing, 100085 (CN)
(74) Representative: Kudlek, Franz Thomas

(57) **Abstract**

Provided are a method and apparatuses for training a classification neural network, a text classification method and apparatus and an electronic device. The method includes: acquiring a regression result of sample text data, which is determined based on a pre-constructed first target neural network and represents a classification trend of the sample text data; inputting the sample text data and the regression result to a second target neural network; obtaining a predicted classification result of each piece of sample text data based on the second target neural network; adjusting a parameter of the second target neural network according to a difference between the predicted classification result and a true value of a corresponding category; and obtaining a trained second target neural network after a change of network loss meets a convergence condition. The second target neural network is trained better, and accuracy of subsequent text data classification is improved.

## Description

### TECHNICAL FIELD

The present disclosure generally relates to the technical field of data processing, and particularly, to a method for training a classification neural network, a text classification method, apparatuses and a device.

### BACKGROUND

Text classification is typically implemented based on a neural network, which however depends on such a basic hypothesis that categories are substantially not associated with each other. Consequently, data with a trend relationship between categories, such as "excellent, good and poor", cannot be accurately classified. On the other hand, data involved in a classification problem is hypothesized to be equal, namely no attention may be paid to whether a part of data is correct or wrong as long as high overall accuracy can be ensured, resulting in low classification accuracy of some critical data.

### SUMMARY

For solving the problem in the related art, embodiments of the present disclosure provide a method and apparatus for training a classification neural network, a text classification method and apparatuses as well as a device, to overcome the shortcomings in the related art.

According to a first aspect of the present invention a method for training a classification neural network is provided, which may include:
acquiring a regression result of sample text data, the regression result being determined based on a pre-constructed first target neural network and representing a classification trend of the sample text data;
inputting the sample text data and the regression result to a second target neural network;
obtaining a predicted classification result of each piece of sample text data based on the second target neural network;
adjusting a parameter of the second target neural network according to a difference between the predicted classification result of each piece of sample text data and a true value of a corresponding category; and
obtaining a trained second target neural network after a change of network loss related to the second target neural network meets a convergence condition.

In an embodiment, the operation of inputting the sample text data and the regression result to the second target neural network may include:
inputting the sample text data to the second target neural network to obtain a sample text vector, and
merging the sample text vector with the regression result of the sample text data to generate a new sample text vector, wherein the regression result of the sample text data serves as a new dimension of the sample text vector.

The operation of obtaining the predicted classification result of each piece of sample text data based on the second target neural network may include:
obtaining the predicted classification result of each piece of sample text data based on the new sample text vector and the second target neural network.

In an embodiment, the operation of inputting the sample text data and the regression result to the second target neural network may include:
determining first sample text data of which a corresponding regression result is a target regression result, and
increasing a weight of the first sample text data in a training process to increase impact of loss of the first sample text data on overall loss.

The operation of obtaining the predicted classification result of each piece of sample text data based on the second target neural network may include:
obtaining the predicted classification result of each piece of sample text data based on sample text data obtained after increase of the weight of the first sample text data and based on the second target neural network.

In an embodiment, the method may further include training the first target neural network by:
inputting the sample text data to the first target neural network, the sample text data being labeled with a true value of the regression result;
obtaining the regression result of the sample text data based on the first target neural network;
adjusting a parameter of the first target neural network according to a difference between the regression result and the true value of the regression result; and
obtaining a trained first target neural network after a change of a network loss function meets a convergence condition.

In an embodiment, the method may further include training the first target neural network by:
inputting the sample text data to the first target neural network, the sample text data being labeled with a true value of a category and a true value of the regression result;
performing feature extraction on the sample text data through a core network in the first target neural network to obtain a feature extraction result;
inputting the feature extraction result to a classification network branch and a regression network branch respectively;
predicting an intermediate classification result of the sample text data through the classification network branch, and predicting the regression result of the sample text data through the regression network branch;
adjusting parameters of the classification network branch and the core network according to a first difference between the intermediate classification result and the true value of the category;
adjusting parameters of the regression network branch and the core network according to a second difference between the regression result and the true value of the regression result; and
obtaining the trained first target neural network after changes of network loss of the classification network branch and network loss of the regression network branch meet the convergence condition.

According to a second aspect of the present invention, a text classification method is provided, which may include:
inputting text data to be classified to a first target neural network to obtain a regression result of the text data to be classified; and
inputting the text data to be classified and the regression result to a second target neural network to obtain a target classification result of the text data to be classified.

According to a third aspect of the present invention, an apparatus for training a classification neural network is provided, which may be include a second network training module.

The second network training module may include:
a regression result acquisition unit, configured to acquire a regression result of sample text data, the regression result being determined based on a pre-constructed first target neural network and representing a classification trend of the sample text data;
a data and result input unit, configured to input the sample text data and the regression result to a second target neural network;
a predicted result acquisition unit, configured to obtain a predicted classification result of each piece of sample text data based on the second target neural network;
a first parameter adjustment unit, configured to adjust a parameter of the second target convolutional neural network according to a difference between the predicted classification result of each piece of sample text data and a true value of a corresponding category; and
a second network acquisition unit, configured to obtain a trained second target neural network after a change of network loss related to the second target neural network meets a convergence condition.

In an embodiment, the data and result input unit may further be configured to:
input the sample text data to the second target neural network to obtain a sample text vector; and
merge the sample text vector with the regression result of the sample text data to generate a new sample text vector, the regression result of the sample text data serving as a new dimension of the sample text vector; and
the predicted result acquisition unit may further be configured to obtain the predicted classification result of each piece of sample text data based on the new sample text vector and based on the second target neural network.

In an embodiment, the data and result input unit may further be configured to:
determine first sample text data of which a corresponding regression result is a target regression result; and
increase a weight of the first sample text data in a training process to increase impact of loss of the first sample text data on overall loss.

The predicted result acquisition unit may further be configured to obtain the predicted classification result of each piece of sample text data based on sample text data obtained after increase of the weight of the first sample text data and based on the second target neural network.

In an embodiment, the apparatus may further include a first network training module.

The first network training module may include:
a sample data input unit, configured to input the sample text data to the first target neural network, the sample text data being labeled with a true value of the regression result;
a sample data regression unit, configured to obtain the regression result of the sample text data based on the first target neural network;
a second parameter adjustment unit, configured to adjust a parameter of the first target neural network according to a difference between the regression result and the true value of the regression result; and
a first network acquisition unit, configured to obtain a trained first target neural network after a change of a network loss function meets a convergence condition.

In an embodiment, the apparatus may further include a first network training module.

The first network training module may include:
a sample data input unit, configured to input the sample text data to the first target neural network, the sample text data being labeled with a true value of a category and a true value of the regression result;
a sample feature extraction unit, configured to perform feature extraction on the sample text data through a core network in the first target neural network to obtain a feature extraction result;
an extraction result input unit, configured to input the feature extraction result to a classification network branch and a regression network branch respectively;
a classification and regression prediction unit, configured to predict an intermediate classification result of the sample text data through the classification network branch and predict the regression result of the sample text data through the regression network branch;
a third parameter adjustment unit, configured to adjust parameters of the classification network branch and the core network according to a first difference between the intermediate classification result and the true value of the category;
a fourth parameter adjustment unit, configured to adjust parameters of the regression network branch and the core network according to a second difference between the regression result and the true value of the regression result; and
the first network acquisition unit, configured to obtain the trained first target neural network after changes of network loss of the classification network branch and network loss of the regression network branch meet the convergence condition.

According to a fourth aspect of the present invention a text classification apparatus is provided, which may include:
a regression result acquisition module, configured to input text data to be classified to a first target neural network to obtain a regression result of the text data to be classified; and
a classification result acquisition module, configured to input the text data to be classified and the regression result to a second target neural network to obtain a target classification result of the text data to be classified.

According to a fifth aspect of the embodiments of the present disclosure, an electronic device is provided, which may include a processor and a memory configured to store instructions executable by the processor.

The processor may be configured to:
acquire a regression result of sample text data, the regression result being determined based on a pre-constructed first target neural network and representing a classification trend of the sample text data;
input the sample text data and the regression result to a second target neural network;
obtain a predicted classification result of each piece of sample text data based on the second target neural network;
adjust a parameter of the second target neural network according to a difference between the predicted classification result of each piece of sample text data and a true value of a corresponding category; and
obtain a trained second target neural network after a change of network loss related to the second target neural network meets a convergence condition.

According to a sixth aspect of the present invention, a computer-readable storage medium is provided, which has stored a computer program that, when executed by a processor, implement the following operations of:
acquiring a regression result of sample text data, the regression result being determined based on a pre-constructed first target neural network and representing a classification trend of the sample text data;
inputting the sample text data and the regression result to a second target neural network;
obtaining a predicted classification result of each piece of sample text data based on the second target neural network;
adjusting a parameter of the second target neural network according to a difference between the predicted classification result of each piece of sample text data and a true value of a corresponding category; and
obtaining a trained second target neural network after a change of network loss related to the second target neural network meets a convergence condition.

The technical solutions provided by embodiments of the present disclosure may have the following beneficial effects.

According to the present invention, a regression result of sample text data may be acquired, the sample text data and the regression result may be input to a second target neural network, then a predicted classification result of each piece of sample text data may be obtained based on the second target neural network, a parameter of the second target convolutional neural network may be adjusted according to a difference between the predicted classification result of each piece of sample text data and a true value of a corresponding category, and furthermore, a trained second target neural network can be obtained after a change of the network loss meets a convergence condition. Since the regression result of the sample text data can be acquired, and the sample text data and the regression result can be input to the second target neural network for training, the second target neural network can be trained better, and the accuracy of subsequent sample data classification based on the second target neural network can be further improved.

It is to be understood that the above general descriptions and detailed descriptions below are only exemplary and explanatory and not intended to limit the present disclosure.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.
FIG 1 is a flowchart showing a method for training a second target neural network that is a classification neural network according to an exemplary embodiment.
FIG 2 is a flowchart showing a method for training a second target neural network that is a classification neural network according to another exemplary embodiment.
FIG. 3 is a flowchart showing a method for training a second target neural network that is a classification neural network according to another exemplary embodiment.
FIG. 4 is a flowchart showing a method for training a first target neural network that is a classification neural network according to an exemplary embodiment.
FIG. 5 is a flowchart showing a method for training a first target neural network that is a classification neural network according to another exemplary embodiment.
FIG. 6 is a flowchart showing a text classification method according to an exemplary embodiment.
FIG. 7 is a block diagram of a second network training module in an apparatus for training a classification neural network according to an exemplary embodiment.
FIG. 8 is a block diagram of an apparatus for training a classification neural network according to an exemplary embodiment.
FIG. 9 is a block diagram of an apparatus for training a classification neural network according to another exemplary embodiment.
FIG. 10 is a block diagram of a text classification apparatus according to an exemplary embodiment.
FIG. 11 is a block diagram of an electronic device according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The embodiments set forth in the following description of exemplary embodiments do not represent all embodiments consistent with the present disclosure. Instead, they are merely examples of apparatuses and methods consistent with aspects related to the present disclosure as recited in the appended claims.

In the related art, text classification may be implemented based on a neural network, which however depends on such a basic hypothesis that categories are substantially not associated with each other. Consequently, for data with a trend relationship between categories, such as "excellent, good and poor", a classification problem cannot be solved well by a classification solution in the related art, namely such data cannot be accurately classified. On the other hand, in the classification solution in the related art, data involved in a classification problem is hypothesized to be equal, namely no attention may be paid to whether a part of data is correct or wrong as long as high overall accuracy can be ensured. However, in some cases, a part of data is required to be as accurate as possible. When the classification problem involves many categories, the problem cannot be solved well by the classification solution in the related art. In view of this, the embodiments of the present disclosure provide a method and apparatus for training a classification neural network, a text classification method and apparatus, an electronic device and a storage medium, to overcome the shortcomings in the related art.

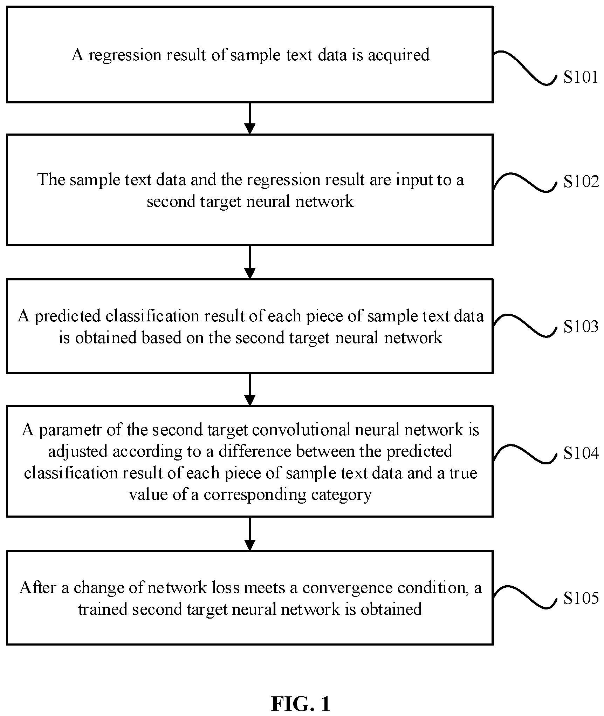

FIG. 1 is a flowchart showing a method for training a second target neural network that is a classification neural network according to an exemplary embodiment. The method of the embodiment may be applied to a server (for example, a server or a server cluster consisting of many servers). As shown in FIG. 1, the method includes the following S101 to S105 for training the second target neural network.

In S101, a regression result of sample text data is acquired.

In the embodiment, for training the second target neural network for classifying text data in combination with text data and a regression result of the text data, the regression result of the sample text data may be acquired.

The regression result of the sample text data may be determined based on a pre-constructed first target neural network, and the regression result may represent a classification trend of the sample text data.

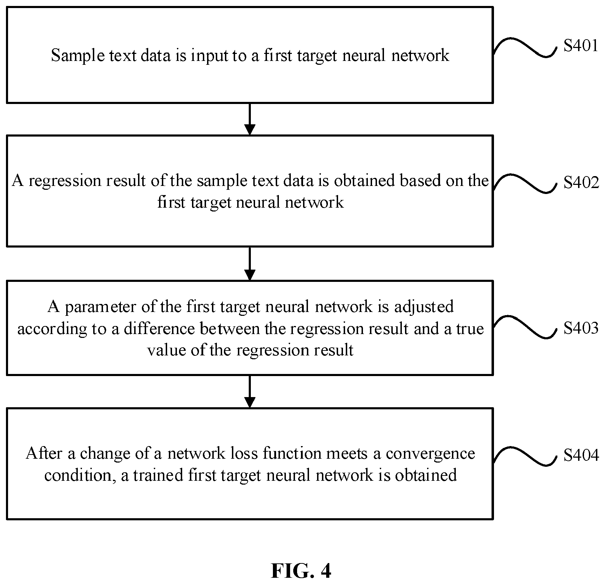

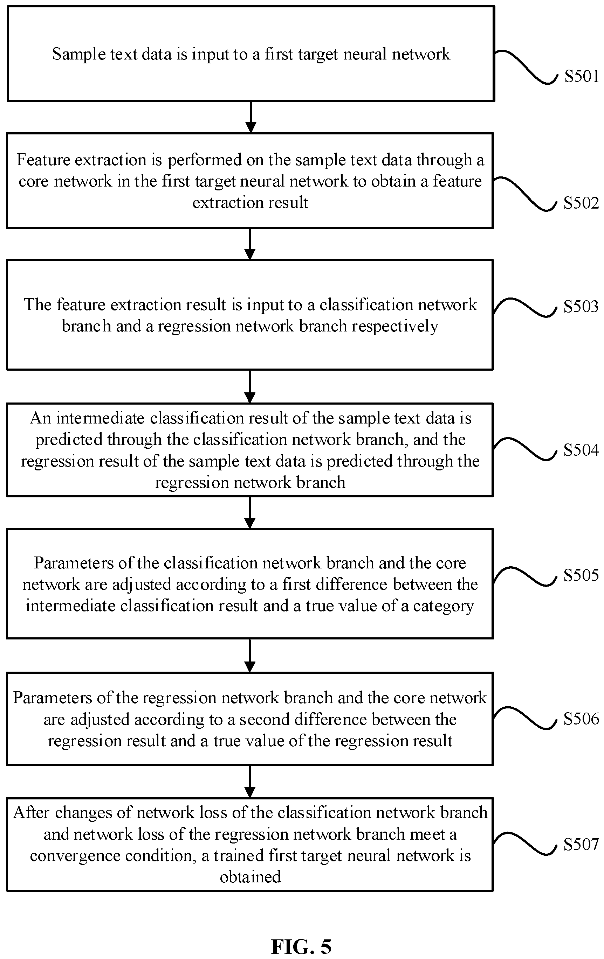

In an optional embodiment, the first target neural network is described with the following embodiments as shown in FIG. 4 or FIG. 5 and will not be elaborated herein.

It is to be noted that, besides the first target neural network, a manner of acquiring the regression result may also be another solution selected by a developer based on a practical service in the related art and an obtained result is also applicable to the subsequent operations of the embodiment. No limits are made thereto in the embodiment.

In S102, the sample text data and the regression result are input to a second target neural network.

In the embodiment, after the regression result of the sample text data is acquired, the sample text data and the regression result may be input to the second target neural network. The second target neural network is also called the second target convolutional neural network

In an example, the second target neural network to be trained may be pre-constructed. Furthermore, after the regression result of the sample text data is acquired, the sample text data and the regression result may be input to the constructed second target neural network.

In S103, a predicted classification result of each piece of sample text data is obtained based on the second target neural network.

In the embodiment, after the sample text data and the regression result are input to the second target neural network, the predicted classification result of each piece of sample text data may be obtained based on the second target neural network.

In an example, after the sample text data and the regression result are input to the second target neural network, features of the sample text data and the regression result may be extracted based on the second target neural network. Furthermore, the predicted classification result of each piece of sample text data may be obtained based on the extracted features.

In S104, a parameter of the second target convolutional neural network is adjusted according to a difference between the predicted classification result of each piece of sample text data and a true value of a corresponding category.

In the embodiment, after the predicted classification result of each piece of sample text data is obtained based on the second target neural network, the parameter of the second target convolutional neural network may be adjusted according to the difference between the predicted classification result of each piece of sample text data and the true value of the corresponding category.

In an example, after the predicted classification result of each piece of sample text data is obtained based on the second target neural network, the true value of the corresponding category of each piece of sample text data may be acquired, then the difference between the predicted classification result of each piece of sample text data and the true value of the corresponding category may be determined, and furthermore, the parameter of the second target convolutional neural network may be adjusted based on the difference.

In S105, after a change of network loss meets a convergence condition, a trained second target neural network is obtained.

In the embodiment, after the parameter of the second target convolutional neural network is adjusted according to the difference between the predicted classification result of each piece of sample text data and the true value of the corresponding category, the trained second target neural network may be obtained after the change of the network loss meets the convergence condition.

In an example, after the predicted classification result of the sample text data is obtained according to the initial second target neural network, the corresponding network loss may be calculated based on the difference between the predicted classification result of each piece of sample text data and the true value of the corresponding category, the parameter of the second target neural network may further be adjusted based on the difference to reduce the difference between the predicted classification result and the true value. After the change of the network loss meets the convergence condition, the trained second target neural network can be obtained.

It can be seen from the above descriptions that, according to the embodiment, the regression result of the sample text data may be acquired, the sample text data and the regression result may be input to the second target neural network, then the predicted classification result of each piece of sample text data may be obtained based on the second target neural network, the parameter of the second target convolutional neural network may be adjusted according to the difference between the predicted classification result of each piece of sample text data and the true value of the corresponding category, and furthermore, the trained second target neural network can be obtained after the change of the network loss meets the convergence condition, so that text data to be classified can be classified subsequently based on the trained second target neural network, and the classification accuracy of the data to be classified can be improved.

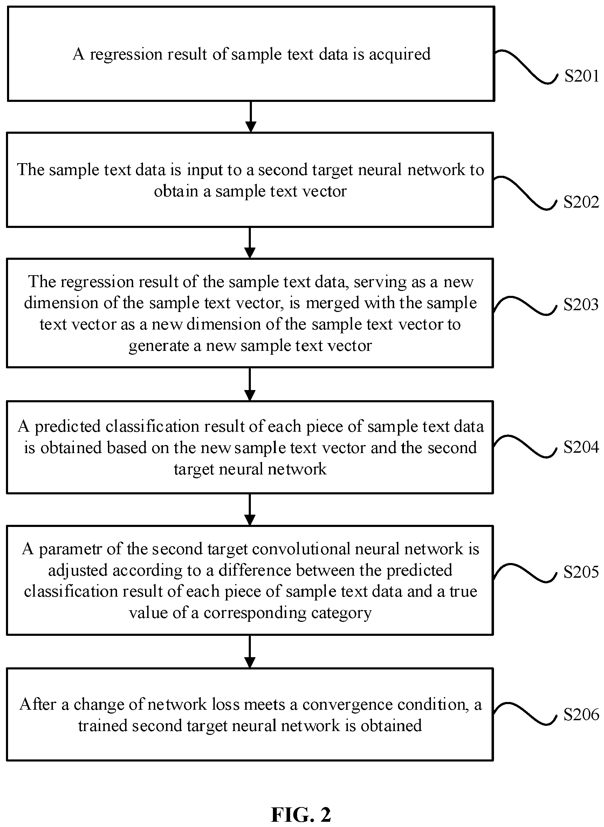

FIG. 2 is a flowchart showing a method for training a second target neural network that is a classification neural network according to another exemplary embodiment. The method of the embodiment may be applied to a server (for example, a server or a server cluster consisting of many servers). As shown in FIG. 2, the method includes the following S201 to S206 for training the second target neural network.

In S201, a regression result of sample text data is acquired.

In S202, the sample text data is input to the second target neural network to obtain a sample text vector.

In the embodiment, the sample text data may be input to the second target neural network to extract a feature of the sample text data based on the second target neural network, and the sample text vector may further be determined according to the feature.

In S203, the regression result of the sample text data, serving as a new dimension of the sample text vector, is merged with the sample text vector to generate a new sample text vector.

In the embodiment, after the regression result of the sample text data is acquired and the sample text data is input to the second target neural network to obtain the sample text vector, the regression result serving as the new dimension of the sample text vector may be merged with the sample text vector to generate the new sample text vector.

In S204, a predicted classification result of each piece of sample text data is obtained based on the new sample text vector and the second target neural network.

In the embodiment, after the regression result of the sample text data, serving as the new dimension of the sample text vector, is merged with the sample text vector to generate the new sample text vector, the predicted classification result of each piece of sample text data can be obtained based on the second target neural network.

In an example, the second target neural network to be trained may be pre-constructed, and furthermore, after the new sample text vector is acquired, the new sample text vector may be input to the constructed second target neural network to obtain the predicted classification result of each piece of sample text data.

In S205, a parameter of the second target convolutional neural network is adjusted according to a difference between the predicted classification result of each piece of sample text data and a true value of a corresponding category.

In S206, after a change of network loss meets a convergence condition, a trained second target neural network is obtained. The change of network loss may be indicated by a change of a network loss function related to the second target neural network.

Related explanations and descriptions about S201 and S205 to S206 may refer to the abovementioned embodiment and elaborations are omitted herein.

It can be seen from the above descriptions that, according to the embodiment, the regression result of the sample text data may be acquired, the sample text data may be input to the second target neural network to obtain the sample text vector, the regression result of the sample text data, as the new dimension of the sample text vector, may be merged with the sample text vector to generate the new sample text vector, the predicted classification result of each piece of sample text data may be obtained based on the new sample text vector and the second target neural network, then the parameter of the second target convolutional neural network may be adjusted according to the difference between the predicted classification result of each piece of sample text data and the true value of the corresponding category, and furthermore, the trained second target neural network can be obtained after the change of the network loss meets the convergence condition. Accordingly, text data to be classified can be subsequently classified based on the trained second target neural network, and the classification accuracy of the data to be classified can be improved.

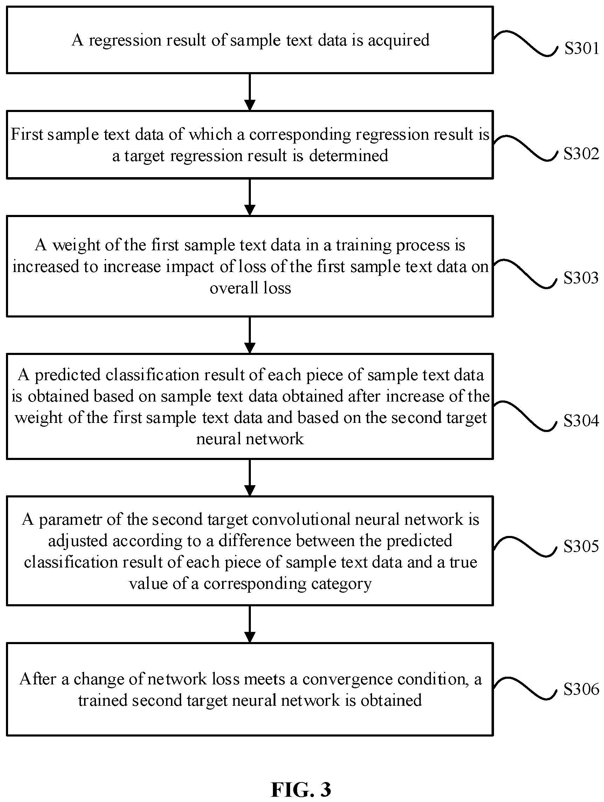

FIG. 3 is a flowchart showing a method for training a second target neural network that is a classification neural network according to another exemplary embodiment. The method of the embodiment may be applied to a server (for example, a server or a server cluster consisting of many servers). As shown in FIG. 3, the method includes the following S301 to S306 for training the second target neural network.

In S301, a regression result of sample text data is acquired.

In S302, first sample text data is determined, wherein a regression result corresponding to the first sample text data is a target regression result.

In the embodiment, after the regression result of the sample text data is acquired, the first sample text data of which the regression result is the target regression result may be determined.

It is to be noted that the numerical value of the target regression result belongs to a predetermined numerical value interval. The numerical value interval may be set by a developer based on a service requirement or a service experience. No limits are made thereto in the embodiment.

In an example, after the regression result of the sample text data is acquired, whether a numerical value of the regression result belongs to the predetermined numerical value interval can be determined; if YES, the sample text data corresponding to the regression result may be determined as the first sample text data.

In S303, a weight of the first sample text data in a training process is increased to increase impact of loss of the first sample text data on overall loss.

In the embodiment, after the first sample text data of which the regression result is the target regression result is determined, the weight of the first sample text data in the training process may be increased to increase impact of the loss of the first sample text data on the overall loss.

In S304, a predicted classification result of each piece of sample text data is obtained based on sample text data obtained after increase of the weight of the first sample text data and based on the second target neural network.

In the embodiment, after the weight of the first sample text data in the training process is increased, the predicted classification result of each piece of sample text data may be obtained based on the sample text data obtained after increase of the weight of the first sample text data and based on the second target neural network.

In an example, the second target neural network to be trained may be pre-constructed, then the weight of each piece of sample text data can be adjusted to increase the weight of the first sample text data and decrease the weight of the other sample text data. Furthermore, the predicted classification result of each piece of sample text data can be obtained based on the second target neural network.

In S305, a parameter of the second target convolutional neural network is adjusted according to a difference between the predicted classification result of each piece of sample text data and a true value of a corresponding category.

In S306, after a change of network loss meets a convergence condition, a trained second target neural network is obtained.

Related explanations and descriptions about S301 and S305 to S306 may refer to the abovementioned embodiment and elaborations are omitted herein.

It can be seen from the above descriptions that, according to the embodiment, the regression result of the sample text data may be acquired, the sample text data may be input to the second target neural network to obtain the sample text vector, the regression result of the sample text data as the new dimension of the sample text vector may be merged with the sample text vector to generate the new sample text vector, the predicted classification result of each piece of sample text data may be obtained based on the new sample text vector and the second target neural network, then the parameter of the second target convolutional neural network may be adjusted according to the difference between the predicted classification result of each piece of sample text data and the true value of the corresponding category, and furthermore, the trained second target neural network can be obtained after the change of the network loss meets the convergence condition. Accordingly, text data to be classified can be subsequently classified based on the trained second target neural network, and the classification accuracy of the data to be classified can be improved.

FIG. 4 is a flowchart showing a method for training a first target neural network that is a classification neural network according to an exemplary embodiment. The method of the embodiment may be applied to a server (for example, a server or a server cluster consisting of many servers). As shown in FIG. 4, the method includes the following S401 to S404 for training the first target neural network.

In S401, sample text data is input to the first target neural network, the sample text data being labeled with a true value of a regression result.

In the embodiment, for training the first target neural network configured to determine a regression result of text data, the sample text data for training the first target neural network may be acquired, each piece of sample text data being labeled with a true value of a regression result.

The true value of the regression result of the sample text data may be set by a developer according to a practical service requirement. No limits are made thereto in the embodiment.

In S402, the regression result of the sample text data is obtained based on the first target neural network.

In the embodiment, after the sample text data is input to the first target neural network, the regression result of the sample text data may be obtained based on the first target neural network.

In an example, an initial first target neural network may be pre-constructed, then the sample text data may be input to the initial first target neural network, and furthermore, the regression result of each piece of sample text data may be obtained based on the initial first target neural network.

Related explanations and descriptions about the regression result may refer to the abovementioned embodiment and elaborations are omitted herein.

In S403, a parameter of the first target neural network is adjusted according to a difference between the regression result and the true value of the regression result.

In the embodiment, after the regression result of the sample text data is obtained based on the first target neural network, the parameter of the first target neural network may be adjusted according to the difference between the regression result and the true value of the regression result.

In an example, after the regression result of the sample text data is obtained based on the first target neural network, the difference between the obtained regression result and the corresponding true value of the regression result may be calculated. For example, a corresponding network loss function may be calculated based on the difference. Furthermore, the parameter of the first target neural network may be adjusted based on the difference to reduce the difference.

In S404, after a change of a network loss function meets a convergence condition, a trained first target neural network is obtained.

In the embodiment, after the parameter of the first target neural network is adjusted according to the difference between the regression result of the sample text data and the true value of the regression result, the trained first target neural network may be obtained after the change of the network loss function meets the convergence condition.

It is to be noted that a construction manner for the network loss function may refer to explanations and descriptions in the related art and no limits are made thereto in the embodiment.

It can be seen from the technical solution that, according to the embodiment, the sample text data may be input to the first target neural network, the regression result of the sample text data may be obtained based on the first target neural network, the parameter of the first target neural network may be adjusted according to the difference between the regression result and the true value of the regression result, and furthermore, the trained first target neural network can be obtained after the change of the network loss function meets the convergence condition. Accordingly, a foundation can be laid for subsequent determination of a regression result of text data based on the trained first target neural network. Furthermore, the text data can be subsequently classified based on the regression result of the text data, and the classification accuracy of the text data can be improved.

FIG. 5 is a flowchart showing a method for training a first target neural network that is a classification neural network according to another exemplary embodiment. The method of the embodiment may be applied to a server (for example, a server or a server cluster consisting of many servers). As shown in FIG. 5, the method includes the following S501 to S507 for training the first target neural network.

In S501, sample text data is input to the first target neural network, the sample text data being labeled with a true value of a category and a true value of a regression result.

In S502, feature extraction is performed on the sample text data through a core network in the first target neural network to obtain a feature extraction result.

In S503, the feature extraction result is input to a classification network branch and a regression network branch respectively.

In S504, an intermediate classification result of the sample text data is predicted through the classification network branch, and the regression result of the sample text data is predicted through the regression network branch.

In S505, parameters of the classification network branch and the core network are adjusted according to a first difference between the intermediate classification result and the true value of the category.

In S506, parameters of the regression network branch and the core network are adjusted according to a second difference between the regression result and the true value of the regression result.

In S507, after changes of network loss of the classification network branch and network loss of the regression network branch meet a convergence condition, a trained first target neural network is obtained.

In the embodiment, the first target neural network may include the core network and the two network branches.

In an example, when the sample data configured to train the first target neural network is acquired, the sample text data may be input to the pre-constructed first target neural network to be trained, and the sample text data may be pre-labeled with the true value of the category and the true value of the regression result. Then, feature extraction may be performed on the sample text data through the core network in the first target neural network to obtain the feature extraction result, and furthermore, the obtained feature extraction result may be input to the classification network branch and regression network branch of the first target neural network respectively.

Based on this, the intermediate classification result of the sample text data may be predicted through the classification network branch, and the regression result of the sample text data may be predicted through the regression network branch. Then, the parameters of the classification network branch and the core network may be adjusted according to the first difference between the intermediate classification result and the true value of the category, and the parameters of the regression network branch and the core network may be adjusted according to the second difference between the regression result and the true value of the regression result.

In such a manner, after the changes of the network loss of the classification network branch and the network loss of the regression network branch meet the convergence condition, the trained first target neural network can be obtained.

It can be seen from the technical solution that, according to the embodiment, the sample text data may be input to the first target neural network, the sample text data being labeled with the true value of the category and the true value of the regression result, feature extraction may be performed on the sample text data through the core network in the first target neural network to obtain the feature extraction result, the feature extraction result may be input to the classification network branch and the regression network branch respectively, the intermediate classification result of the sample text data may be predicted through the classification network branch, the regression result of the sample text data may be predicted through the regression network branch. The parameters of the classification network branch and the core network may be adjusted according to the first difference between the intermediate classification result and the true value of the category, the parameters of the regression network branch and the core network may be adjusted according to the second difference between the regression result and the true value of the regression result. Furthermore, the trained first target neural network may be obtained after the changes of the network loss of the classification network branch and the network loss of the regression network branch meet the convergence condition. Accordingly, the first target neural network can be trained accurately, a foundation can be laid for subsequent determination of a regression result of text data based on the trained first target neural network, furthermore, the text data can be subsequently classified based on the regression result of the text data, and the classification accuracy of the text data can be improved.

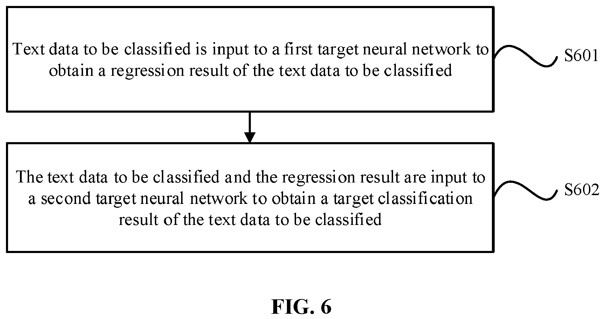

FIG. 6 is a flowchart showing a text classification method according to an exemplary embodiment. The method of the embodiment may be applied to a server (for example, a server or a server cluster consisting of many servers). As shown in FIG. 6, the method includes the following S601 to S602.

In S601, text data to be classified is input to a first target neural network to obtain a regression result of the text data to be classified.

In the embodiment, the server may input the text data to be classified to the pre-trained first target neural network to extract a feature of the text data to be classified based on the first target neural network and determine the regression result of the text data to be classified according to extracted feature information.

It is to be noted that a type of the text data to be classified may be set by a developer according to a practical service requirement, for example, set to be natural language text data or natural language text data (for example, a text representation) obtained by formalization processing. No limits are made thereto in the embodiment.

In the embodiment, the regression result may represent a classification trend of the text data to be classified.

In an optional embodiment, a training manner for the first target neural network may refer to the abovementioned embodiments and will not be elaborated herein.

In S602, the text data to be classified and the regression result are input to a second target neural network to obtain a target classification result of the text data to be classified.

In the embodiment, after the text data to be classified is input to the first target neural network to obtain the regression result of the text data to be classified, the regression result and the text data to be classified may be input to the pretrained second target neural network to extract features of the regression result and the text data based on the second target neural network and predict classification of the text data to be classified according to the extracted features to obtain the target classification result of the text data to be classified.

In an optional embodiment, a training manner for the second target neural network may refer to the abovementioned embodiments and will not be elaborated herein.

It can be seen from the technical solution that, according to the embodiment, the text data to be classified may be input to the first target neural network to obtain the regression result of the text data to be classified and the text data to be classified, and the regression result may be input to the second target neural network to obtain the target classification result of the text data to be classified. Since the regression result of the text data also may be acquired on the basis of extracting the feature information of the text data to be classified, the target classification result of the text data to be classified may be determined based on the regression result of the data and the feature of the data. Furthermore, the classification accuracy of the text data to be classified can be improved.

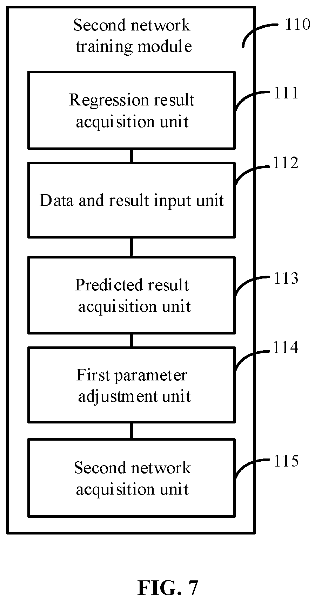

FIG. 7 is a block diagram of a second network training module in an apparatus for training a classification neural network according to an exemplary embodiment. The apparatus of the embodiment may be applied to a server (for example, a server or a server cluster consisting of many servers). As shown in FIG. 7, the second network training module 110 includes a regression result acquisition unit 111, a data and result input unit 112, a predicted result acquisition unit 113, a first parameter adjustment unit 114 and a second network acquisition unit 115.

The regression result acquisition unit 111 is configured to acquire a regression result of sample text data, the regression result being determined based on a pre-constructed first target neural network and representing a classification trend of the sample text data.

The data and result input unit 112 is configured to input the sample text data and the regression result to a second target neural network.

The predicted result acquisition unit 113 is configured to obtain a predicted classification result of each piece of sample text data based on the second target neural network.

The first parameter adjustment unit 114 is configured to adjust a parameter of the second target convolutional neural network according to a difference between the predicted classification result of each piece of sample text data and a true value of a corresponding category.

The second network acquisition unit 115 is configured to, after a change of network loss meets a convergence condition, obtain a trained second target neural network. The change of the network loss may be indicated by a change of a network loss function.

In an optional embodiment, the data and result input unit 112 may further be configured to:
input the sample text data to the second target neural network to obtain a sample text vector; and
merge the regression result of the sample text data, serving as a new dimension of the sample text vector, with the sample text vector to generate a new sample text vector.

The predicted result acquisition unit 213 may further be configured to obtain the predicted classification result of each piece of sample text data based on the new sample text vector and the second target neural network.

In another optional embodiment, the data and result input unit 112 may further be configured to:
determine first sample text data, wherein a regression result corresponding to the first sample text data is a target regression result; and
increase a weight of the first sample text data in a training process to increase impact of loss of the first sample text data on overall loss.

The predicted result acquisition unit 213 may further be configured to obtain the predicted classification result of each piece of sample text data based on sample text data obtained after increase of the weight of the first sample text data and the second target neural network.

It can be seen from the above descriptions that, according to the embodiment, the regression result of the sample text data may be acquired, the sample text data and the regression result may be input to the second target neural network, then the predicted classification result of each piece of sample text data may be obtained based on the second target neural network, the parameter of the second target convolutional neural network may be adjusted according to the difference between the predicted classification result of each piece of sample text data and the true value of the corresponding category, and furthermore, the trained second target neural network can be obtained after the change of the network loss meets the convergence condition. Since the regression result of the sample text data can be acquired, and the sample text data and the regression result can be input to the second target neural network for training, the second target neural network can be trained better, and the accuracy of subsequent sample data classification based on the second target neural network can further be improved.

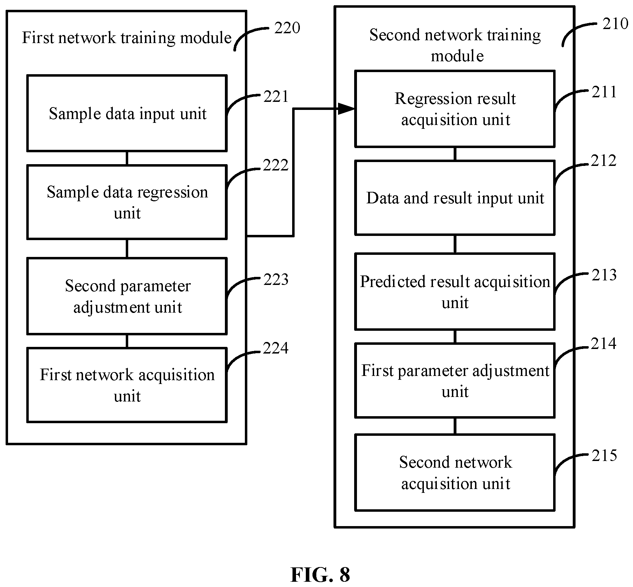

FIG. 8 is a block diagram of an apparatus for training a classification neural network according to an exemplary embodiment. The apparatus of the embodiment may be applied to a server (for example, a server or a server cluster consisting of many servers). Functions of a regression result acquisition unit 211, a data and result input unit 212, a predicted result acquisition unit 213, a first parameter adjustment unit 214 and a second network acquisition unit 215 are the same as those of the regression result acquisition unit 111, the data and result input unit 112, the predicted result acquisition unit 113, the first parameter adjustment unit 114 and the second network acquisition unit 115 in the embodiment shown in FIG. 7, and will not be elaborated herein. As shown in FIG. 7, the apparatus further includes a first network training module 220. The first network training module 220 includes:
a sample data input unit 221, configured to input the sample text data to the first target neural network, the sample text data being labeled with a true value of the regression result;
a sample data regression unit 222, configured to obtain the regression result of the sample text data based on the first target neural network;
a second parameter adjustment unit 223, configured to adjust a parameter of the first target neural network according to a difference between the regression result and the true value of the regression result; and
a first network acquisition unit 224, configured to, after a change of a network loss function meets a convergence condition, obtain a trained first target neural network.

It can be seen from the above descriptions that, according to the embodiment, the sample text data may be input to the first target neural network, the regression result of the sample text data may be obtained based on the first target neural network, then the parameter of the first target neural network may be adjusted according to the difference between the regression result and the true value of the regression result, and the trained first target neural network can be obtained after the change of the network loss function meets the convergence condition. Accordingly, the first target neural network can be accurately trained based on the sample text data, and the regression result of the sample text data can subsequently be acquired accurately based on the trained first target neural network.

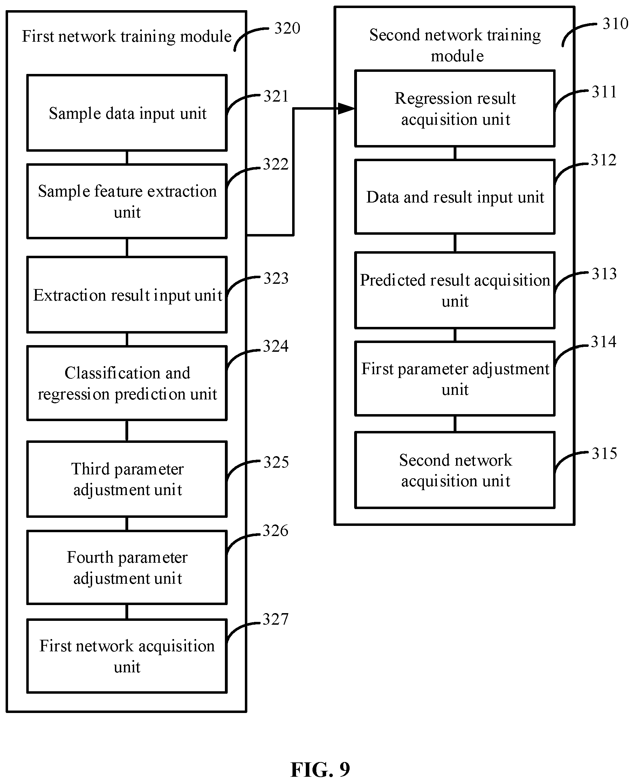

FIG. 9 is a block diagram of an apparatus for training a classification neural network according to another exemplary embodiment. The apparatus of the embodiment may be applied to a server (for example, a server or a server cluster consisting of many servers). Functions of a regression result acquisition unit 311, a data and result input unit 312, a predicted result acquisition unit 313, a first parameter adjustment unit 314 and a second network acquisition unit 315 are the same as those of the regression result acquisition unit 111, the data and result input unit 112, the predicted result acquisition unit 113, the first parameter adjustment unit 114 and the second network acquisition unit 115 in the embodiment shown in FIG. 7, and will not be elaborated herein. As shown in FIG. 9, the apparatus further includes a first network training module 320. The first network training module 320 includes:
a sample data input unit 321, configured to input the sample text data to the first target neural network, the sample text data being labeled with a true value of a category and a true value of the regression result;
a sample feature extraction unit 322, configured to perform feature extraction on the sample text data through a core network in the first target neural network to obtain a feature extraction result;
an extraction result input unit 323, configured to input the feature extraction result to a classification network branch and a regression network branch respectively;
a classification and regression prediction unit 324, configured to predict an intermediate classification result of the sample text data through the classification network branch and predict the regression result of the sample text data through the regression network branch;
a third parameter adjustment unit 325, configured to adjust parameters of the classification network branch and the core network according to a first difference between the intermediate classification result and the true value of the category;
a fourth parameter adjustment unit 326, configured to adjust parameters of the regression network branch and the core network according to a second difference between the regression result and the true value of the regression result; and
the first network acquisition unit 327, configured to, after changes of network loss of the classification network branch and network loss of the regression network branch meet a convergence condition, obtain a trained first target neural network.

It can be seen from the above descriptions that, according to the embodiment, the sample text data may be input to the first target neural network, feature extraction may be performed on the sample text data through the core network in the first target neural network to obtain the feature extraction result, the feature extraction result may be input to the classification network branch and the regression network branch respectively, the intermediate classification result of the sample text data may be predicted through the classification network branch, the regression result of the sample text data may be predicted through the regression network branch, then the parameters of the classification network branch and the core network may be adjusted according to the first difference between the intermediate classification result and the true value of the category, the parameters of the regression network branch and the core network may be adjusted according to the second difference between the regression result and the true value of the regression result, and furthermore, the trained first target neural network can be obtained after the changes of the network loss of the classification network branch and the network loss of the regression network branch meet the convergence condition. Accordingly, the first target neural network can be trained accurately based on the sample text data, and furthermore, the regression result of the sample text data can subsequently be acquired accurately based on the trained first target neural network.

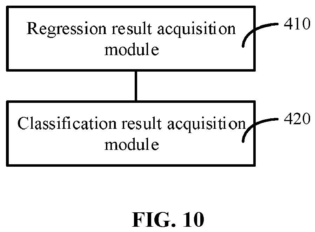

FIG. 10 is a block diagram of a text classification apparatus according to an exemplary embodiment. The apparatus of the embodiment may be applied to a server (for example, a server or a server cluster consisting of many servers). As shown in FIG. 10, the apparatus includes a regression result acquisition module 410 and a classification result acquisition module 420.

The regression result acquisition module 410 is configured to input text data to be classified to a first target neural network to obtain a regression result of the text data to be classified.

The classification result acquisition module 420 is configured to input the text data to be classified and the regression result to a second target neural network to obtain a target classification result of the text data to be classified.

It can be seen from the technical solution that, according to the embodiment, the text data to be classified may be input to the first target neural network to obtain the regression result of the text data to be classified and the text data to be classified, and the regression result may be input to the second target neural network to obtain the target classification result of the text data to be classified. Since the regression result of the text data is acquired in a process of classifying the text data to be classified and the target classification result of the text data to be classified is acquired based on the regression result and the text data to be classified, the classification accuracy of the text data can be improved.

With respect to the device in the above embodiment, the specific manners for performing operations for individual modules therein have been described in detail in the embodiment regarding the method, which will not be elaborated herein.

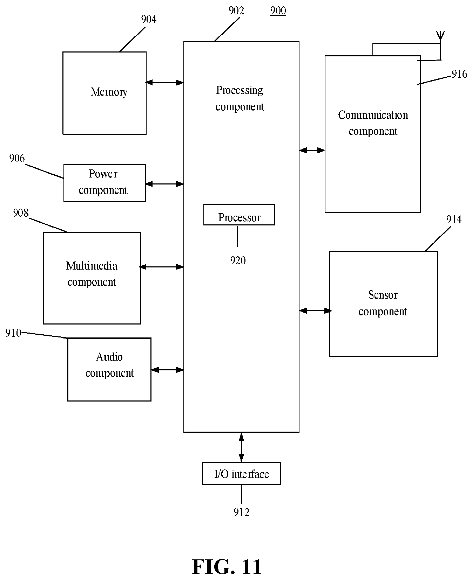

FIG. 11 is a block diagram of an electronic device according to an exemplary embodiment. In an example, the device 900 may be a mobile phone, a computer, a digital broadcast terminal, a messaging device, a gaming console, a tablet, a medical device, exercise equipment, a personal digital assistant and the like.

Referring to FIG. 11, the device 900 may include one or more of the following components: a processing component 902, a memory 904, a power component 906, a multimedia component 908, an audio component 910, an Input/Output (I/O) interface 912, a sensor component 914, and a communication component 916.

The processing component 902 typically controls overall operations of the device 900, such as the operations associated with display, telephone calls, data communications, camera operations, and recording operations. The processing component 902 may include one or more processors 920 to execute instructions to perform all or part of the operations in the abovementioned method. Moreover, the processing component 902 may include one or more modules which facilitate interaction between the processing component 902 and the other components. For instance, the processing component 902 may include a multimedia module to facilitate interaction between the multimedia component 908 and the processing component 902.

The memory 904 is configured to store various types of data to support the operation of the device 900. Examples of such data include instructions for any applications or methods operated on the device 900, contact data, phonebook data, messages, pictures, video, etc. The memory 904 may be implemented by any type of volatile or non-volatile memory devices, or a combination thereof, such as a Static Random Access Memory (SRAM), an Electrically Erasable Programmable Read-Only Memory (EEPROM), an Erasable Programmable Read-Only Memory (EPROM), a Programmable Read-Only Memory (PROM), a Read-Only Memory (ROM), a magnetic memory, a flash memory, and a magnetic or optical disk.

The power component 906 provides power for various components of the device 900. The power component 906 may include a power management system, one or more power supplies, and other components associated with generation, management and distribution of power for the device 900.

The multimedia component 908 includes a screen providing an output interface between the device 900 and a user. In some embodiments, the screen may include a Liquid Crystal Display (LCD) and a Touch Panel (TP). If the screen includes the TP, the screen may be implemented as a touch screen to receive an input signal from the user. The TP includes one or more touch sensors to sense touches, swipes and gestures on the TP. The touch sensors may not only sense a boundary of a touch or swipe action but also detect a duration and pressure associated with the touch or swipe action. In some embodiments, the multimedia component 908 includes a front camera and/or a rear camera. The front camera and/or the rear camera may receive external multimedia data when the device 900 is in an operation mode, such as a photographing mode or a video mode. Each of the front camera and the rear camera may be a fixed optical lens system or have focusing and optical zooming capabilities.

The audio component 910 is configured to output and/or input an audio signal. In an example, the audio component 910 may include a Microphone (MIC), and the MIC is configured to receive an external audio signal when the device 900 is in the operation mode, such as a call mode, a recording mode and a voice recognition mode. The received audio signal may further be stored in the memory 904 or sent through the communication component 916. In some embodiments, the audio component 910 further includes a speaker configured to output the audio signal.

The I/O interface 912 provides an interface between the processing component 902 and a peripheral interface module, and the peripheral interface module may be a keyboard, a click wheel, a button and the like. The button may include, but not limited to: a home button, a volume button, a starting button and a locking button.

The sensor component 914 includes one or more sensors configured to provide status assessment in various aspects for the device 900. For instance, the sensor component 914 may detect an on/off status of the device 900 and relative positioning of components, such as a display and small keyboard of the device 900, and the sensor component 914 may further detect a change in a position of the device 900 or a component of the device 900, presence or absence of contact between the user and the device 900, orientation or acceleration/deceleration of the device 900 and a change in temperature of the device 900. The sensor component 914 may further include a proximity sensor configured to detect presence of an object nearby without any physical contact. The sensor component 914 may also include a light sensor, such as a Complementary Metal Oxide Semiconductor (CMOS) or Charge Coupled Device (CCD) image sensor, configured for use in an imaging application. In some embodiments, the sensor component 914 may also include an acceleration sensor, a gyroscope sensor, a magnetic sensor, a pressure sensor or a temperature sensor.

The communication component 916 is configured to facilitate wired or wireless communication between the device 900 and another device. The device 900 may access a communication-standard-based wireless network, such as a Wireless Fidelity (WiFi) network, a 2nd-Generation (2G) or 3rd-Generation (3G) network, a 4th-Generation (4G) or 5th-Generation (5G) network or a combination thereof. In an exemplary embodiment, the communication component 916 receives a broadcast signal or broadcast associated information from an external broadcast management system through a broadcast channel. In an exemplary embodiment, the communication component 916 further includes a Near Field Communication (NFC) module to facilitate short-range communication. In an example, the NFC module may be implemented based on a Radio Frequency Identification (RFID) technology, an Infrared Data Association (IrDA) technology, an Ultra-Wide Band (UWB) technology, a Bluetooth (BT) technology and another technology.

In an exemplary embodiment, the device 900 may be implemented by one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, micro-controllers, microprocessors or other electronic components, and is configured to execute the abovementioned method.

In an exemplary embodiment, there is also provided a non-transitory computer-readable storage medium including instructions, such as the memory 904 including instructions, and the instructions may be executed by the processor 920 of the device 900 to implement the abovementioned method. In an example, the non-transitory computer-readable storage medium may be a ROM, a Random Access Memory (RAM), a Compact Disc Read-Only Memory (CD-ROM), a magnetic tape, a floppy disc, an optical data storage device and the like.

In the description of the present disclosure, the terms "one embodiment" "some embodiments" "example" "specific example" or "some examples" and the like can indicate a specific feature described in connection with the embodiment or example, a structure, a material or feature included in at least one embodiment or example. In the present disclosure, the schematic representation of the above terms is not necessarily directed to the same embodiment or example.

Moreover, the particular features, structures, materials, or characteristics described can be combined in a suitable manner in any one or more embodiments or examples. In addition, various embodiments or examples described in the specification, as well as features of various embodiments or examples, can be combined and reorganized.

In some embodiments, the control and/or interface software or app can be provided in a form of a non-transitory computer-readable storage medium having instructions stored thereon is further provided. For example, the non-transitory computer-readable storage medium can be a ROM, a CD-ROM, a magnetic tape, a floppy disk, optical data storage equipment, a flash drive such as a USB drive or an SD card, and the like.

Implementations of the subject matter and the operations described in this disclosure can be implemented in digital electronic circuitry, or in computer software, firmware, or hardware, including the structures disclosed herein and their structural equivalents, or in combinations of one or more of them. Implementations of the subject matter described in this disclosure can be implemented as one or more computer programs, i.e., one or more portions of computer program instructions, encoded on one or more computer storage medium for execution by, or to control the operation of, data processing apparatus.

Alternatively, or in addition, the program instructions can be encoded on an artificially-generated propagated signal, e.g., a machine-generated electrical, optical, or electromagnetic signal, which is generated to encode information for transmission to suitable receiver apparatus for execution by a data processing apparatus. A computer storage medium can be, or be included in, a computer-readable storage device, a computer-readable storage substrate, a random or serial access memory array or device, or a combination of one or more of them.

Moreover, while a computer storage medium is not a propagated signal, a computer storage medium can be a source or destination of computer program instructions encoded in an artificially-generated propagated signal. The computer storage medium can also be, or be included in, one or more separate components or media (e.g., multiple CDs, disks, drives, or other storage devices). Accordingly, the computer storage medium can be tangible.

The operations described in this disclosure can be implemented as operations performed by a data processing apparatus on data stored on one or more computer-readable storage devices or received from other sources.

The devices in this disclosure can include special purpose logic circuitry, e.g., an FPGA (field-programmable gate array), or an ASIC (application-specific integrated circuit). The device can also include, in addition to hardware, code that creates an execution environment for the computer program in question, e.g., code that constitutes processor firmware, a protocol stack, a database management system, an operating system, a cross-platform runtime environment, a virtual machine, or a combination of one or more of them. The devices and execution environment can realize various different computing model infrastructures, such as web services, distributed computing, and grid computing infrastructures.

A computer program (also known as a program, software, software application, app, script, or code) can be written in any form of programming language, including compiled or interpreted languages, declarative or procedural languages, and it can be deployed in any form, including as a stand-alone program or as a portion, component, subroutine, object, or other portion suitable for use in a computing environment. A computer program can, but need not, correspond to a file in a file system. A program can be stored in a portion of a file that holds other programs or data (e.g., one or more scripts stored in a markup language document), in a single file dedicated to the program in question, or in multiple coordinated files (e.g., files that store one or more portions, sub-programs, or portions of code). A computer program can be deployed to be executed on one computer or on multiple computers that are located at one site or distributed across multiple sites and interconnected by a communication network.

The processes and logic flows described in this disclosure can be performed by one or more programmable processors executing one or more computer programs to perform actions by operating on input data and generating output. The processes and logic flows can also be performed by, and apparatus can also be implemented as, special purpose logic circuitry, e.g., an FPGA, or an ASIC.

Processors or processing circuits suitable for the execution of a computer program include, by way of example, both general and special purpose microprocessors, and any one or more processors of any kind of digital computer. Generally, a processor will receive instructions and data from a read-only memory, or a random-access memory, or both. Elements of a computer can include a processor configured to perform actions in accordance with instructions and one or more memory devices for storing instructions and data.

Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device (e.g., a universal serial bus (USB) flash drive), to name just a few.

Devices suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in, special purpose logic circuitry.

To provide for interaction with a user, implementations of the subject matter described in this specification can be implemented with a computer and/or a display device, e.g., a VR/AR device, a head-mount display (HMD) device, a head-up display (HUD) device, smart eyewear (e.g., glasses), a CRT (cathode-ray tube), LCD (liquid-crystal display), OLED (organic light emitting diode), or any other monitor for displaying information to the user and a keyboard, a pointing device, e.g., a mouse, trackball, etc., or a touch screen, touch pad, etc., by which the user can provide input to the computer.

Implementations of the subject matter described in this specification can be implemented in a computing system that includes a back-end component, e.g., as a data server, or that includes a middleware component, e.g., an application server, or that includes a front-end component, e.g., a client computer having a graphical user interface or a Web browser through which a user can interact with an implementation of the subject matter described in this specification, or any combination of one or more such back-end, middleware, or front-end components.

The components of the system can be interconnected by any form or medium of digital data communication, e.g., a communication network. Examples of communication networks include a local area network ("LAN") and a wide area network ("WAN"), an inter-network (e.g., the Internet), and peer-to-peer networks (e.g., ad hoc peer-to-peer networks).

While this specification contains many specific implementation details, these should not be construed as limitations on the scope of any claims, but rather as descriptions of features specific to particular implementations. Certain features that are described in this specification in the context of separate implementations can also be implemented in combination in a single implementation. Conversely, various features that are described in the context of a single implementation can also be implemented in multiple implementations separately or in any suitable subcombination.

Moreover, although features can be described above as acting in certain combinations and even initially claimed as such, one or more features from a claimed combination can in some cases be excised from the combination, and the claimed combination can be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing can be advantageous. Moreover, the separation of various system components in the implementations described above should not be understood as requiring such separation in all implementations, and it should be understood that the described program components and systems can generally be integrated together in a single software product or packaged into multiple software products.

As such, particular implementations of the subject matter have been described. Other implementations are within the scope of the following claims. In some cases, the actions recited in the claims can be performed in a different order and still achieve desirable results. In addition, the processes depicted in the accompanying figures do not necessarily require the particular order shown, or sequential order, to achieve desirable results. In certain implementations, multitasking or parallel processing can be utilized.

Other implementation solutions of the present disclosure will be apparent to those skilled in the art from consideration of the specification and practice of the present disclosure. This present disclosure is intended to cover any variations, uses, or adaptations of the present disclosure following the general principles thereof and including such departures from the present disclosure as come within known or customary practice in the art. It is intended that the specification and examples be considered as exemplary only, with a true scope and spirit of the present disclosure being indicated by the following claims.

It will be appreciated that the present disclosure is not limited to the exact construction that has been described above and illustrated in the accompanying drawings, and that various modifications and changes may be made without departing from the scope thereof. It is intended that the scope of the present disclosure only be limited by the appended claims.

## Claims

1. A method for training a classification neural network, comprising:
acquiring (S101) a regression result of sample text data, the regression result being determined based on a pre-constructed first target neural network and representing a classification trend of the sample text data;
inputting (S102) the sample text data and the regression result to a second target neural network;
obtaining (S103) a predicted classification result of each piece of sample text data based on the second target neural network;
adjusting (S104) a parameter of the second target neural network according to a difference between the predicted classification result of each piece of sample text data and a true value of a corresponding category; and
obtaining (S105) a trained second target neural network after a change of network loss related to the second target neural network meets a convergence condition.

2. The method of claim 1, wherein
inputting the sample text data and the regression result to the second target neural network comprises:
inputting the sample text data to the second target neural network to obtain a sample text vector, and
merging the sample text vector with the regression result of the sample text data to generate a new sample text vector, wherein the regression result of the sample text data serves as a new dimension of the sample text vector; and
obtaining the predicted classification result of each piece of sample text data based on the second target neural network comprises:
obtaining the predicted classification result of each piece of sample text data based on the new sample text vector and the second target neural network.

3. The method of claim 1 or 2, wherein
inputting the sample text data and the regression result to the second target neural network comprises:
determining first sample text data, wherein a regression result corresponding to the first sample text data is a target regression result, and
increasing a weight of the first sample text data in a training process to increase impact of loss of the first sample text data on overall loss; and
obtaining the predicted classification result of each piece of sample text data based on the second target neural network comprises:
obtaining the predicted classification result of each piece of sample text data based on sample text data obtained after increase of the weight of the first sample text data and based on the second target neural network.

4. The method of any one of the preceding claims, further comprising:
inputting the sample text data to the first target neural network, the sample text data being labeled with a true value of the regression result;
obtaining the regression result of the sample text data based on the first target neural network;
adjusting a parameter of the first target neural network according to a difference between the regression result and the true value of the regression result; and
obtaining a trained first target neural network after a change of a network loss function meets a convergence condition.

5. The method of any one of the preceding claims, further comprising:
inputting the sample text data to the first target neural network, the sample text data being labeled with a true value of a category and a true value of the regression result;
performing feature extraction on the sample text data through a core network in the first target neural network to obtain a feature extraction result;
inputting the feature extraction result to a classification network branch and a regression network branch respectively;
predicting an intermediate classification result of the sample text data through the classification network branch, and predicting the regression result of the sample text data through the regression network branch;
adjusting parameters of the classification network branch and the core network according to a first difference between the intermediate classification result and the true value of the category;
adjusting parameters of the regression network branch and the core network according to a second difference between the regression result and the true value of the regression result; and
obtaining the trained first target neural network after changes of network loss of the classification network branch and network loss of the regression network branch meet the convergence condition.

6. A text classification method, comprising:
inputting (S601) text data to be classified to a first target neural network to obtain a regression result of the text data to be classified; and
inputting (S602) the text data to be classified and the regression result to a second target neural network to obtain a target classification result of the text data to be classified.

7. An apparatus for training a classification neural network, comprising a second network training module (110), wherein the second network training module comprises:
a regression result acquisition unit(111), configured to acquire a regression result of sample text data, the regression result being determined based on a pre-constructed first target neural network and representing a classification trend of the sample text data;
a data and result input unit(112), configured to input the sample text data and the regression result to a second target neural network;
a predicted result acquisition unit(113), configured to obtain a predicted classification result of each piece of sample text data based on the second target neural network;
a first parameter adjustment unit(114), configured to adjust a parameter of the second target neural network according to a difference between the predicted classification result of each piece of sample text data and a true value of a corresponding category; and
a second network acquisition unit(115), configured to obtain a trained second target neural network after a change of network loss related to the second target neural network meets a convergence condition.

8. The apparatus of claim 7, wherein the data and result input unit is further configured to:
input the sample text data to the second target neural network to obtain a sample text vector; and
merge the sample text vector with the regression result of the sample text data to generate a new sample text vector, wherein the regression result of the sample text data serves as a new dimension of the sample text vector; and
the predicted result acquisition unit is further configured to obtain the predicted classification result of each piece of sample text data based on the new sample text vector and the second target neural network.

9. The apparatus of claim 7 or 8, wherein the data and result input unit is further configured to
determine first sample text data, wherein a regression result corresponding to the first sample text data is a target regression result;
increase a weight of the first sample text data in a training process to increase impact of loss of the first sample text data on overall loss; and
the predicted result acquisition unit is further configured to obtain the predicted classification result of each piece of sample text data based on sample text data obtained after increase of the weight of the first sample text data and based on the second target neural network.

10. The apparatus of any one of claims 7 to 9, further comprising a first network training module (220), wherein the first network training module comprises:
a sample data input unit(221), configured to input the sample text data to the first target neural network, the sample text data being labeled with a true value of the regression result;
a sample data regression unit(222), configured to obtain the regression result of the sample text data based on the first target neural network;
a second parameter adjustment unit(223), configured to adjust a parameter of the first target neural network according to a difference between the regression result and the true value of the regression result; and
a first network acquisition unit(224), configured to obtain a trained first target neural network after a change of a network loss function meets a convergence condition.

11. The apparatus of any one of claims 7 to 10, further comprising a first network training module (320), wherein the first network training module comprises:
a sample data input unit (321), configured to input the sample text data to the first target neural network, the sample text data being labeled with a true value of a category and a true value of the regression result;
a sample feature extraction unit (322), configured to perform feature extraction on the sample text data through a core network in the first target neural network to obtain a feature extraction result;
an extraction result input unit (323), configured to input the feature extraction result to a classification network branch and a regression network branch respectively;
a classification and regression prediction unit(324), configured to predict an intermediate classification result of the sample text data through the classification network branch and predict the regression result of the sample text data through the regression network branch;
a third parameter adjustment unit (325), configured to adjust parameters of the classification network branch and the core network according to a first difference between the intermediate classification result and the true value of the category;
a fourth parameter adjustment unit (326), configured to adjust parameters of the regression network branch and the core network according to a second difference between the regression result and the true value of the regression result; and
a first network acquisition unit (327), configured to obtain a trained first target neural network after changes of network loss of the classification network branch and network loss of the regression network branch meet the convergence condition.

12. A text classification apparatus, comprising:
a regression result acquisition module (410), configured to input text data to be classified to a first target neural network to obtain a regression result of the text data to be classified; and
a classification result acquisition module (420), configured to input the text data to be classified and the regression result to a second target neural network to obtain a target classification result of the text data to be classified.

13. An electronic device, comprising:
a processor, and
a memory configured to store instructions executable by a processor,
wherein the processor is configured to implement the method for training a classification neural network of any one of claims 1-5 or the text classification method of claim 6.

14. A computer-readable storage medium, having stored a computer program thereon that, when executed by a processor, implements the method for training a classification neural network of any one of claims 1-5 or the text classification method of claim 6.
